# EUROPÄISCHE PATENTSCHRIFT

(11) **EP 2 222 882 B1**
(45) Veröffentlichungstag und Bekanntmachung des Hinweises auf die Patenterteilung: **02.07.2014**
(21) Anmeldenummer: 08801261.2
(22) Anmeldetag: 03.09.2008
(51) Int. Cl.: C21D 11/00, G05B 19/042

(54) **VERFAHREN UND COMPUTER-PROGRAMM ZUM AUTOMATISCHEN ERSTELLEN VON TECHNOLOGISCHEN REZEPTEN ZUR WÄRMEBEHANDLUNG VON METALLISCHEN WERKSTÜCKEN IN INDUSTRIEÖFEN SOWIE EINRICHTUNG ZUR DURCHFÜHRUNG DES VERFAHRENS UND COMPUTER-PROGRAMMS**
METHOD AND COMPUTER PROGRAM FOR THE AUTOMATIC PREPARATION OF TECHNOLOGICAL RECIPES FOR THE HEAT TREATMENT OF METAL WORKPIECES IN INDUSTRIAL FURNACES AND DEVICE FOR PERFORMING THE METHOD AND COMPUTER PROGRAM
PROCÉDÉ ET PROGRAMME INFORMATIQUE POUR L'ÉLABORATION AUTOMATIQUE DE FORMULES TECHNOLOGIQUES POUR LE TRAITEMENT THERMIQUE DE PIÈCES MÉTALLIQUES À USINER DANS DES FOURS INDUSTRIELS ET DISPOSITIF POUR METTRE EN OEUVRE LE PROCÉDÉ ET LE PROGRAMME INFORMATIQUE

(30) Priorität: 10.10.2007 DE 202007014120 U
(43) Veröffentlichungstag der Anmeldung: 01.09.2010
(73) Patentinhaber: Ipsen International GmbH, 47533 Kleve (DE)
(72) Erfinder: BIESTER, Frank, 47533 Kleve (DE); EVERSMANN, Thomas, 46284 Dorsten (DE); SCHULTE, Werner, 46569 Hünxe (DE); WILLEKE, Jörg, 40724 Hilden (DE); WOLFF, Regina, 47546 Kalkar (DE)
(74) Vertreter: Köster, Christian
(86) Internationale Anmeldenummer: PCT/DE2008/001454
(87) Internationale Veröffentlichungsnummer: WO 2009/046691

(56) Entgegenhaltungen:
- US-A- 5 187 670
- US-A1- 2002 146 657
- US-B1- 6 591 215
- US-B1- 7 065 714
- FRANK THEISEN: "Leitrechnersoftware für vollautomatische Chargenofenlinien" GASWÄRME INTERNATIONAL, Mai 2007 (2007-05), Seiten 363-365, XP002509660 Essen,Germany
- RANJEET VADER: "Development of Computer Aided Heat Treatment Planning System" Juni 2002 (2002-06), WORCESTER POLYTECHNIC INSTITUTE , WORCESTER, USA , XP002509663 Absätze [02.2], [02.3], [02.4]; Abbildungen 2.20,2.21,2.22 Absätze [03.1] - [03.4]; Abbildungen 3.1-3.17; Tabelle 3.1 Absätze [04.4], [04.5]; Abbildungen 3.20-3.39
- HILL NANDI, MARK THOMASON,MICKEY DELHUNTY: "Software Tool Optimizes Furnace Design And Operation" HEAT TREATING PROGRESS, November 2002 (2002-11), XP002509661 Ohio,USA
- INVENSYS: "3500 Series User Guide" EUROTHERM, November 2005 (2005-11), Seiten 69-78, XP002509662

## Beschreibung

### Technisches Gebiet

Die Erfindung betrifft ein Verfahren und Computer-Programm zum automatischen Erstellen von technologischen Rezepten für eine Wärmebehandlung von metallischen Werkstücken in Industrieöfen. Die Rezepte werden nach bedienerseitiger Vorgabe und Einstellung der erforderlichen Parameter durch das Computer-Programm erstellt und sind beliebig wiederholbar wie speicherbar und darstellbar sowie für eine autonome Durchführung der Wärmebehandlung im Industrieofen abrufbar. Ferner betrifft die Erfindung eine Einrichtung zur automatisierten Durchführung des Verfahrens und Computerprogramms für die jeweils programmierte Wärmebehandlung im autonomen Ablauf des Industrieofens.

### Stand der Technik

Das eingangs bezeichnete technische Gebiet wurde hinsichtlich seiner optimalen technologischen Vorbereitung der später durchzuführenden Wärmebehandlung des Werkstückes oder der Charge in einem Industrieofen bisher schon mehrfach untersucht.

Demnach sind Verfahren und Vorrichtungen zur Wärmebehandlung von metallischen Werkstücken in Industrieöfen bekannt, die die Abläufe rationalisieren, jedoch bietet der Bereich der technologischen Vorbereitung noch weitere Potentiale, den entwickelten Stand der Wärmebehandlungsverfahren und Ofentechnik effizienter zu nutzen und die Verfügbarkeit eines diesbezüglichen Industrieofens zu erhöhen.

Zur Bestimmung des Ausmaßes der Wärmebehandlung eines Materials wird nach DT 26 30 818 A1 gelehrt, dass verfahrensgemäß ein für die Wärmebehandlungstemperatur repräsentatives Signal mittels einer Formel die Zahl der Wärmebehandlungseinheiten, die Zeiten, eine Konstante, die Temperatur und die relative Geschwindigkeit des Erweichens/Erhärtens über die Zeit integriert wird. Die Zahl der Wärmebehandlungseinheiten wird während der Verfahrensdurchführung aufsummiert, um das Ausmaß der Wärmebehandlung zu bestimmen. Dabei können das Signal kontinuierlich und Proben des Signals nach ausgewählten Intervallen integriert werden. Die Einstellung der Zahl der Wärmebehandlungseinheiten kann nach der niedrigsten Temperatur vorgenommen werden. Die Brennstoffzufuhrsteuerung wird nach Abgleichung verschiedener Temperaturen ermöglicht.

Die zugehörige Vorrichtung umfasst im Wesentlichen eine Einrichtung für die Integration des Signals und eine Einrichtung zum Aufsummieren der Zahl der Wärmebehandlungseinheiten zur Durchführung obiger Verfahrensschritte.

Nachteilig ist hierbei zunächst, dass mit den zu integrierenden Werten die Vielzahl der Varianten der Wärmebehandlungen wie z.B. das Härten von Metallen nicht komplex genug erfassbar ist. Des Weiteren müssen während des Beginns oder der Durchführung der Wärmebehandlung Zielwerte oft korrigiert werden.

Eine weitere bekannte Vorrichtung zur Wärmebehandlung von metallischen Werkstücken gemäß DE 20 2006 018 879 U1 weist eine Kontrolleinrichtung mit Meßeinrichtung auf, die Soll-Parameter für die Behandlungsatmosphäre und IstWerte zur Signalabgabe erfasst und mittels einer Steuereinheit die Wärmebehandlung bei Ungleichheit von Soll und Ist abbrechbar macht.

Diese Vorrichtung kann aufgabengemäß nur einen begrenzten Ablauf der Verfahrensdurchführung steuern.

Darüber hinaus offenbart schon die EP 0 556 176 B2/DE 91 04 377 T3 ein spezielles Steuersystem zur Planung der Werkstückbehandlung in einem Wärmebehandlungsverfahren. Die Wärmebehandlung von Teilen erfolgt mit einer Vielzahl von verbundenen Kammern, davon zwei des Rotations- bzw. Drehtyps für die Karburierung oder Aufkohlung. Eine Vielzahl von Teilepositionen unterliegt reaktiven oder reaktionsfreudigen Kohlenstoffgasen bei erhöhten Temperaturen. Die Teile werden unabhängig von ihrer Aufgabe in die drehenden Kammern abgegeben oder ausgestoßen. Die Bearbeitungskammern bearbeiten mindestens zwei Teile simultan oder gleichzeitig mit einzigartigen Bearbeitungszeiten.

Dieses Steuersystem besitzt Speichermittel zum Aufzeichnen je Teil spezifischer Bearbeitungszeiten, Soll-Bearbeitungspfade mit Folge der Bearbeitungskammer, Anzahl und Lage besetzter Teilepositionen in jeder Kammer und diverser Rezept- und/oder Anweisungsvorgaben und deren Berechnungen. Zeitfensteraufzeichnungen, Statusmittel zum Aktualisieren, eine Datenbank, Härtetiefenwerte. Das Eintreten in die Vorheizungskammer, Langsamkühlkammer, Press- und Chargenabschreckkammer und Drehhärtekammer werden dabei gesteuert. Das Verfahren lehrt die Zeitplanung und/oder Zuweisung von Teilen in die kontinuierlicher Ofenstruktur mit den Schritten zum Speichern/Aufzeichnen der Funktionen des Steuersystems.

Abgesehen von der Anwendung des Steuersystems für die Wärmebehandlung von Teilen in einer kontinuierlichen Ofenstruktur mit einer Vielzahl von verbundenen Kammern, lehrt auch dieses Steuersystem und das Verfahren weder die Möglichkeit eines autonomen Ablaufs der Wärmebehandlung noch eine technologische Vorbereitung von Wärmebehandlungen in gattungsgemäßen Industrieöfen. Bestenfalls kann das Steuersystem nur für die kontinuierlichen Ofenstrukturen angewendet werden.
Das Dokument FRANK THEISEN: "Leitrechnersoftware für vollautomatische Chargenofenlinien" GASWÄRME INTERNATIONAL, Mai 2007 (2007-05), Seiten 363-365, Essen,Germany betrifft ein Verfahren und Computer-Programm zur Erstellung und Bearbeitung von Rezepten, Fertigungsschritten und Fertigungsabläufen, wobei durch manuelles Auswahl eines Vorlagerezepts und manuelles Ersetzen von festen Werten mit Variablen bzw. Formel Variantenrezepten erstellt werden können. Die variablen Parameter bzw. Formel in den Variantenrezepten werden beim Senden an den Programmregler mit den konkreten Werten automatisch aufgelöst, die in den manuell erstellten Fertigungsschritt-Definitionen angegeben sind.

Allen bekannten gattungsähnlichen Verfahren und Vorrichtungen ist gemeinsam, dass die vorzugebenden einzelnen Verfahrensparameter weitgehend vom wärmetechnischen Know-how des Bedieners oder Betreibers abhängig sind. Die erforderliche wärmetechnische spezifische Behandlung des Werkstücks mit den zu erzielenden Eigenschaften wird deshalb nicht immer erreicht.

Für die ordnungsgemäße Durchführung eines bestimmten Wärmebehandlungsverfahrens zur Wärmebehandlung metallischer Werkstücke ist es bedienerseitig erforderlich, entsprechende Verfahrensparameter für die Verfahrensdurchführung vorzugeben. Derartige Verfahrensparameter können beispielsweise Temperatur, Druck, Bearbeitungsdauer und/oder dergleichen sein. Diese bedienerseitig vorzugebenden Verfahrensparameter bestimmen das Verfahrensergebnis, weshalb es für die Erzielung eines wunschgemäß zu erreichenden Verfahrensergebnisses maßgeblich darauf ankommt, die entsprechenden Verfahrensparameter möglichst exakt und nach objektiven Kriterien vorzugeben.

Auch wenn sich Erfahrungswerte durchaus als geeignet für die Vorgabe von Verfahrensparametern für die Durchführung eines bestimmten Wärmebehandlungsverfahrens nutzen lassen, ist dies nicht frei von Nachteilen.

So kommt es insbesondere immer wieder zu bedienerseitigen Fehleinschätzungen und daraus resultierenden Fehleingaben hinsichtlich der Verfahrensparameter, was dazu führen kann, dass Werkstücke fehlbehandelt werden und die Ausschussrate unnötigerweise ansteigt.

Insbesondere besteht für die Betreiber von Industrieöfen Bedarf daran, Verfahrensparameter für die Durchführung eines Wärmebehandlungsverfahrens zur Wärmebehandlung metallischer Werkstücke zuverlässig so vorgeben zu können, dass danach die Wärmebehandlung der Werkstücke im Industrieofen weitgehend frei von Fehleingaben und autonom verlaufen kann.

### Darstellung der Erfindung

Aufgabe der Erfindung ist es, ein Verfahren und Computer-Programm zum automatischen Erstellen von technologischen Rezepten für die Wärmebehandlung von metallischen Werkstücken in Industrieöfen zu schaffen und durch eine programmgesteuerte Bestimmung Voraussetzungen zu ermöglichen, dass die Durchführung von Wärmebehandlungen metallischer Werkstücke in Industrieöfen vor dem Beginn der Wärmebehandlung im jeweiligen Industrieofen planbar und danach mittels einer Einrichtung autonom ablaufend durchführbar wird.

Die Richtung, welches Material und wie zu behandeln ist, soll schon so zielsicher programmiert und vorgegeben werden, dass die Wärmebehandlung nach den objektiv bedingten technologischen Vorgaben der Wärmebehandlungsprozess im Ofen ablaufen kann.

Danach kann das erfindungsgemäss programmierte und generierte Rezept zur Behandlung im mit der Werkstückcharge beschickten Ofen aktiviert werden, womit schließlich der programmgemäße und autonome Wärmebehandlungsablauf gesichert ist.

Sämtliche Verfahrensparameter sollen damit weitgehend unabhängig von subjektiv bedingten Einflüssen oder Kenntnissen (Know-how) des Bedieners oder Betreibers vom Beginn bis zum Abschluss der Wärmebehandlung im Industrieofen eingehalten werden.

Die Aufgabe wird entsprechend dem Verfahren und Computer-Programm mittels
- Werte für einen Werkstoff eines jeweiligen Werkstücks, Angaben zu Wärmebehandlungsverfahren und von technischen Angaben des jeweiligen Industrieofens,
- einer stufenweisen Vorgabe oder Generierung von vorkalkulierbaren Parametern für die Wärmebehandlung des Werkstücks und
- eines ein Wärmebehandlungsprogramm generierenden Computers mit Datenbanken und einer programmgemäßen Speicherung eines generierten Wärmebehandlungsprogramms sowie den Abruf zur Aktivierung der Wärmebehandlung im Industrieofen erfindungsgemäß dadurch gelöst, daß
   a) in einem ersten Programmschritt eine Werkstoffgruppe und der Werkstoff ausgewählt und in Abhängigkeit vom ausgewählten Werkstoff ein Wärmebehandlungsverfahren bestimmt wird,
   b) in einem zweiten Programmschritt Daten des Werkstücks/der Charge wie
      ■ eine Wandstärke eingegeben,
      ■ eine Vergleichsgeometrie ausgewählt,
      ■ ein Chargengewicht eingegeben und
      ■ ein Chargenaufbau ausgewählt
      werden und daraus automatisch eine virtuelle Wandstärke berechnet wird,
   c) in einem dritten Programmschritt aus der virtuellen Wandstärke zusammen mit den Daten der Charge und den verfügbaren Parametern des Industrieofens eine vom Werkstoff abhängige und ggf. manuell veränderbare Aufheiz- und Abschreckcharakteristik integriert werden und
   d) in einem vierten Programmschritt zuerst
      ■ Daten von dem gewählten Material zu Behandlungsparametern und Daten von dem gewählten Wärmebehandlungsverfahren zu einer Rezeptstrukturvorlage geladen werden und
      ■ aus der Rezeptstrukturvorlage unter Verwendung der Daten aus einer Benutzerschnittstelle, wie
         ∘ Aufheizcharakteristik und
         ∘ Abschreckcharakteristik
            sowie erforderlichenfalls
         ∘ eine Sollhärte
         zu einer Rezeptstruktur zusammengestellt werden, woraus
      ■ Werte von Rezeptursegmenten, wie
         ∘ Segmentdauern,
         ∘ Temperaturen,
         ∘ Rampensteigungen und/oder Temperaturrampen und
         ∘ Drücke
         festgelegt werden und dann im Ergebnis des vierten Programmschritts ein technologisches Wärmebehandlungsrezept automatisch generiert wird, welches nacharbeitbar, in einer Programmdatenbank (12) speicherbar sowie für die Wärmebehandlung von metallischen Werkstücken zum Industrieofen abrufbar ist.

Es kann nach dem dritten Programmschritt in einem ersten Arbeitsschritt die gewünschte Sollhärte als Richtwert einer Arbeitshärte aus einem Wertebereich nach vom Werkstoff abhängigen und erreichbaren Arbeitshärten ausgewählt und eingegeben werden.

Nach mindestens dem dritten Programmschritt kann in einem zweiten Arbeitsschritt eine Optimierungseinstellung für eine zeitoptimierte oder verzugsarme Behandlung des Werkstücks/der Charge festgelegt und eingestellt werden.

In einem dritten Arbeitsschritt kann eine manuelle Nachbearbeitung und Speicherung des generierten Wärmebehandlungsrezeptes in der Programmdatenbank erfolgen.

Das Verfahren und Programm ist in einem fünften Programmschritt ausbaufähig, indem eine Übertragung des Wärmebehandlungsrezeptes an den Ofen erfolgt. Dazu wird für die im Industrieofen autonom ablaufende Wärmebehandlung des Werkstücks/der Charge das Wärmebehandlungsprogramm aus der Programmdatenbank abgerufen und zur Wärmebehandlung im Industrieofen vermittelt.

Bereits im ersten Programmschritt wird das Behandlungsverfahren aus Daten der Werkstoffgruppe und des Werkstoffs gemäß einer ersten Datei, zweiten Datei und dritten Datei einer Materialdatenbank bestimmt.

Die Berechnung der virtuellen Wandstärke im zweiten Programmschritt erfolgt gemäß einem Algorithmus als Funktion = f_{V}* nach der Beziehung f_{V} = f_{CG} * f_{CA} * f_{G1}.

Im Programm wird ein Regelwerk verwendet, welches eine vierte Datei für die Vergleichsgeometrie, eine fünfte Datei für den Chargenaufbau, eine sechste Datei für die Aufheizcharakteristik und eine siebte Datei für die Abschreckcharakteristik umfasst.

Die vierte Datei im Regelwerk umfasst die Daten für die Angabe von Vergleichsgeometrien, wie Kugel, zylindrische Scheibe, Hohlzylinder Ring, Zylinder Welle, Vierkant Platte, Vierkant Stab, Vierkant Würfel.

Die fünfte Datei im Regelwerk umfasst den Chargenaufbau wie einlagig liegend, einlagig stehend, mehrlagig liegend, mehrlagig stehend, gestapelt.

Im dritten Programmschritt werden die Aufheizcharakteristik gemäß der sechsten Datei im Regelwerk in der Dimension der Anzahl der Vorwärmstufen in Steigungen von °C/min als Gradient und die Abschreckcharakteristik gemäß der siebten Datei in bar eingegeben.

Vorteilhaft für den Bediener ist es, dass schon nach dem ersten Programmschritt ein im Computer hinterlegtes ZTU-Schaubild und ein hinterlegtes Anlass-Schaubild angezeigt werden.

Weiterhin ist vorteilhaft, dass die gewünschte Arbeitshärte gemäß einer achten Datei aus der Materialdatenbank eingegeben wird.

Das im Industrieofen ablaufende, aus Parametern einer Wärmebehandlung einer vorgegebenen Technologie generierte und gespeicherte komplexe wärmetechnologische Rezept kann mittels einer Meßeinheit mit Istwerten gemessen, über eine Vergleichsschaltung mit den Parametern der vorgegebenen Technologie verglichen und bei Ungleichheit mittels einer Regelungseinheit problemlos nachgeregelt werden.

Die Einrichtung zur Durchführung des Verfahrens umfasst einen Computer mit Datenbanken und einer programmgemäßen Speicherung eines jeweils generierten Wärmebehandlungsprogramms sowie dessen Abruf zur Aktivierung der Wärmebehandlung in einem Industrieofen, wobei dem Computer erfindungsgemäß eine Benutzeroberfläche zugeordnet ist, welche Felder zur Anzeige von
■ Werkstoffgruppe, Werkstoff und Verfahren,
■ Wandstärke, Vergleichsgeometrie, Chargengewicht, Chargenaufbau, virtueller Wandstärke,
■ Aufheizcharakteristik, Abschreckcharakteristik,
■ Arbeitshärte/Sollhärte,
■ zeitoptimiert und verzugsarm und
■ Programmname
aufweist.

Die Benutzeroberfläche weist des Weiteren einen ersten virtuellen Schieberegler für die vom Bediener auswählbare und veränderbare Vergleichsgeometrie, einen zweiten virtuellen Schieberegler für den vom Bediener auswählbaren und veränderbaren Chargenaufbau, einen dritten virtuellen Schieberegler für die vom Bediener auswählbare und veränderbare virtuelle Wandstärke, einen vierten virtuellen Schieberegler für die vom Bediener auswählbare und veränderbare Aufheizcharakteristik und einen fünften virtuellen Schieberegler für die vom Bediener auswählbare und veränderbare Abschreckcharakteristik auf.

Mit diesen Elementen gestattet sich die Benutzeroberfläche zu einem bestimmenden technischen Mittel, welches die Lösung der Aufgabenstellung schöpferisch unterstützt.

Schließlich kann die Einrichtung zweckmäßig dadurch vervollkommnet werden, wenn eine Meßeinheit für im Industrieofen gemessene Istwerte, eine Vergleichsschaltung für den Vergleich mit Parametern der nach dem generierten Wärmebehandlungsprogramm vorgegebenen Technologie und eine Regelungseinheit für eine Nachregelung bei Ungleichheit von Parametern vorgesehen ist.

Die im Industrieofen autonom ablaufende Wärmebehandlung des Werkstücks/der Charge kann nach Abspeicherung der komplex generierten Rezeptur über einen Button auf der Benutzeroberfläche aus der Programmdatenbank abgerufen und zur Wärmebehandlung im Industrieofen vermittelt werden.

Das jeweils generierte Wärmebehandlungprogramm kann in der Benutzeroberfläche in symbolischen Reitern dargestellt, darin manuell bearbeitet und über einen weiteren Button abgespeichert werden.

Vorteilhaft ist gemäß dem Verfahren vorgesehen; dass die tatsächlichen Verfahrensparameter eines Wärmebehandlungsverfahrens als Istwerte gemessen werden können.

Danach wird es ermöglicht, die als Istwerte gemessenen Verfahrensparameter mit den als Sollwerten vorgegebenen Verfahrensparametern zu vergleichen und bei Ungleichheit zwischen gemessenen Istwerten und vorgegebenen Sollwerten eine Nachregelung der Verfahrensparameter durchzuführen.

Allgemein lehrt das Verfahren, dass in Abhängigkeit eines ersten Auswahlwertes eine Liste zur Auswahl eines zweiten Auswahlwertes bestimmt, erzeugt oder generiert wird und dass Vorgabewerte in Abhängigkeit von wärmezubehandelnden Werkstücken bzw. in Abhängigkeit einer aus einer Mehrzahl von wärmezubehandelnden Werkstücken gebildeten Charge vorgegeben werden.

Typisch ist, dass zunächst Auswahl- und/oder Vorgabewerte zwar bedienerseitig ausgewählt bzw. vorgegeben werden, jedoch dann in Abhängigkeit dieser Werte die Verfahrensparameter automatisch einer eine Funktion ausführenden entsprechenden Recheneinheit generiert werden. Die so bestimmten Verfahrensparameter werden hier als vorkalkulierbare Parameter bezeichnet, die bedienerseitig nur in objektiv erforderlichen Grenzen manipulierbar sind.

Im Regelfall, wenn also keine bedienerseitige Manipulation stattfindet, werden die so vorkalkulierten Parameter als verfahrensseitig einzuhaltende Sollwerte und somit für das technologische Rezept übernommen. Die Wärmebehandlung kann dann nach dem generierten technologischen Rezept durchgeführt werden, und zwar in einem autonomen Ablauf im Industrieofen.

Gegebenenfalls ist auch eine Manipulation der zunächst nur kalkulatorisch bestimmten Parameter bedienerseitig erforderlich. Mit dem erfindungsgemäßen Verfahren wird deshalb nicht ausgeschlossen, Änderungen an den kalkulatorisch bestimmten Parametern vornehmen zu können. Dies betrifft bedienerseitig auszuführende Optimierungseinstellungen, wenn z.B. zeitoptimiert oder verzugsarm behandelt werden soll.

In Abhängigkeit dieser Optimierungseinstellungen, die in nur gewissen und vom System anhand der zuvor eingegebenen Auswahl- und/oder Vorgabewerte bestimmten Grenzen möglich ist, kann eine zusätzliche Optimierung der Verfahrensparameter zur Durchführung des generierten Wärmebehandlungsverfahrens erreicht werden.

Im Bedarfsfall kann eine Mehrzahl sowohl von Auswahl- und/oder Vorgabewerten als auch von Optimierungseinstellungen vorgenommen werden, um das erforderliche Wärmebehandlungsergebnis zu erreichen.

Zur Durchführung des Verfahrens und Computer-Programms kann die erfindungsgemäße Einrichtung aus den Komplexen, wie
■ einen das Wärmebehandlungprogramm generierenden Computer,
■ oben benannte hinterlegte Dateien aus der Materialdatenbank und dem Regelwerk,
■ die programmgemäße Speicherung des generierten Wärmebehandlungsprogramms und.
■ den Abruf zur Aktivierung des Wärmebehandlungsprogramms im Industrieofen
zusammengestellt werden.

Die Erfindung gestattet es in vorteilhafter Weise, Verfahrensparameter für die Durchführung eines bestimmten Wärmebehandlungsverfahrens in automatisierter Weise zu bestimmen und festzulegen. Es wird so effizient eine von bedienerseitigen Erfahrungswerten unabhängige Bestimmung und Festlegung von Verfahrensparametern für die Durchführung eines Wärmebehandlungsverfahrens zur Wärmebehandlung von metallischen Werkstücken erzielt.

Mit der Erfindung wird es damit möglich, Verfahrensparameter für die Durchführung eines Wärmebehandlungsverfahrens zur Wärmebehandlung von metallischen Werkstücken in zuverlässiger Weise und reproduzierbar vorgeben zu können. Wunschgemäße Behandlungsergebnisse können so bedienerunabhängig, das heißt unabhängig von bedienerseitigen oder subjektiven Erfahrungs- und Verfahrenswerten erreicht werden.

Die Erfindung verfügt über fixe Auswahlwerte aus Listen mit vorgegebenen Daten. Hierzu zählt u.a. der Werkstoff der zu behandelnden Werkstücke. So ist z.B. zur Auswahl des Werkstoffes eine Liste vorgesehen, in der die zugehörigen Werkstoffgruppen aufgeführt sind, wie zum Beispiel Schnellarbeitsstahl, Kaltarbeitsstahl, Warmarbeitsstahl, nichtrostender Stahl, woraus bedienerseitig zur Festlegung eines ersten Auswahlwertes auszuwählen ist.

Für einen weiteren Auswahlwert ist die Wahl des gewünschten Behandlungsverfahrens vorgesehen. Auch diesbezüglich ist eine Liste mit möglichen Behandlungsverfahren, wie z. □̃ Härten, Härten und Anlassen, Härten und Warmbad, Härten und Warmbad und Anlassen, Anlassen, Weichglühen, Lösungsglühen, Spannungsglühen und/oder dergleichen hinterlegt, aus welcher bedienerseitig ein wunschgemäß durchzuführendes Behandlungsverfahren auszuwählen ist.

Dabei schließt unter Umständen die vorangegangene Auswahl eines Werkstoffes ein dem Grunde nach zur Auswahl zur Verfügung stehendes Behandlungsverfahren von vornherein aus, weshalb gemäß markanten Merkmalen der Erfindung Werte generiert werden, mittels welcher in Abhängigkeit eines ersten Auswahlwertes die weiteren Auswahlwerte erzeugbar sind. Bedienerseitige Eingabefehler oder die Eingabe falscher Erfahrungswerte können so grundsätzlich von vornherein minimiert oder sogar vermieden werden.

Die bedienerseitig auszuwählenden Auswahlwerte aus der Materialdatenbank dienen somit zur Generierung von Verfahrensparametern zur Durchführung eines bestimmten Wärmebehandlungsverfahrens im Rahmen besagten technologischen Rezepts.

Zur Festlegung dieser Verfahrensparameter dienen neben den Auswahlwerten auch Vorgabewerte, wobei im Sinne der Erfindung solche Werte zu verstehen sind, die in Abhängigkeit von wärmezubehandelnden Werkstücken bzw. in Abhängigkeit einer aus einer Mehrzahl von wärmezubehandelnden Werkstücken gebildeten Charge vorzugeben sind.

Dazu gehören die Wandstärke der zu behandelnden Werkstücke, die Vergleichsgeometrie, das Werkstück- oder Chargengewicht sowie der Chargenaufbau. Dabei ist unter "Wandstärke des zu behandelnden Werkstückes" die Dicke des Materials des zu behandelnden Werkstückes oder des zu behandelnden Werkstückteils zu verstehen.

Als Vergleichsgeometrie können beispielsweise die Kugel, die zylindrische Scheibe, der hohlzylindrische Ring, die zylindrische Welle, die Vierkantplatte, der Vierkantstab oder der Vierkantwürfel angegeben werden.

Auf Basis dieser Vorgabewerte, die auch als Chargendaten bezeichnet werden können, lassen sich unter Berücksichtigung der bedienerseitig zuvor ausgewählten Auswahlwerte des Regelwerks Verfahrensparameter zur Durchführung des bestimmten Wärmebehandlungsverfahrens automatisch bestimmen. Verfahrensparameter des Regelwerks in diesem Sinne sind dann die Aufheizcharakteristik sowie der Abschreckdruck und die Sollwerte sowie Optimierungseinstellungen.

Die Aufheizcharakteristik beschreibt die Intensität und Form des Aufheizvorganges für den Härteprozess. Sie gibt die Anzahl der Vorwärmstufen von beispielsweise 0 bis 4 vor, ebenso wie die Steigung des Temperatursollwertes und zwar sowohl zwischen den einzelnen Vorwärmstufen als auch zwischen der letzten Vorwärmstufe und den zu erreichenden Temperatursollwerten. Die Steigungen liegen beispielsweise im Bereich von 5°C pro Minute bis 30°C pro Minute, wobei gegebenenfalls auch ein Temperatursprung vorgegeben sein kann.

Der Abschreckdruck liegt je nach verwendetem Abschreckgas beispielsweise im Bereich von 2 bar bis 12 bar.

Die mittels der Erfindung bestimmbaren Verfahrensparameter, wie zum Beispiel Aufheizcharakteristik und Abschreckdruck, dienen als zunächst kalkulatorische Verfahrensparameter, die bedienerseitig innerhalb von gewissen Grenzen, das heißt Ober- und Untergrenzen manipuliert, das heißt nacheingestellt werden können.

Zu diesem Zweck ist auch vorgesehen, dass anhand der vorerläuterten Chargendaten die "virtuelle", das heißt eine vorstellbare mögliche oder scheinbare Wandstärke als Zwischenwert berechnet und generiert ausgegeben wird.

Dieser Zwischenwert kann vom Bediener nur in vorgegebenen Grenzen manipuliert, das heißt nacheingestellt werden. In Abhängigkeit einer solchen Nacheinstellung ergeben sich Verfahrensparameter, die mittels der erfindungsgemäßen Einrichtung nebst Recheneinheiten automatisch bestimmbar sind. So gibt die erfindungsgemäße Einrichtung also die Möglichkeit, die automatisch bestimmten Verfahrensparameter zwar zu manipulieren, das heißt nacheinstellen zu können, jedoch nicht nach willkürlichen Werten.

Aufgrund der mit der Erfindung gegebenen Möglichkeit, Verfahrensparameter in gewissen Grenzen bedienerseitig nacheinstellen zu können, sind die nach den erfassten Auswahl- und/oder Vorgabewerten bestimmten Verfahrensparameter als kalkulatorische Verfahrensparameter bezeichnet.

In Ausbildung der Erfindung lassen sich die tatsächlichen, das heißt die für eine wunschgemäße Durchführung eines Wärmebehandlungsverfahrens als Sollwerte vorgegebenen Verfahrensparameter dann bei Durchführung der Wärmebehandlung messen, vergleichen und ggf. korrigieren.

Regelmäßig bestimmen die kalkulatorischen Verfahrensparameter das Rezept. Wie vorstehend beschrieben ist auch eine Nacheinstellung der kalkulatorischen Verfahrensparameter vorgesehen, so dass die nacheingestellten Verfahrensparameter dann die bei der Verfahrensdurchführung einzuhaltenden Sollwerte gewährleisten.

Die Erfindung umfaßt schließlich auch die bedienerseitige Möglichkeit, die als Rezeptur generierte Wärmebehandlung zeitoptimiert oder mit Blick auf die zu behandelnden Werkstücke verzugsarm optimiert und ohne Fehldaten durchzuführen. Abgesehen davon können auch obligatorische Angaben zur gewünschten Sollhärte vorher eingestellt werden.

Sämtliche bedienerseitig vorzunehmenden Einstellungen wie Optimierungseinstellungen dienen dazu, die zuvor bestimmten Verfahrensparameter hinsichtlich des zu erzielenden Wärmebehandlungsergebnisses optimiert für die spätere autonom ablaufende Wärmebehandlung vorzubereiten.

Dabei kann die bei einer Durchführung eines Wärmebehandlungsverfahrens verwendete Regelungseinrichtung mit Messeinrichtung dazu dienen, nach Messung der tatsächlichen Istwerte und mittels einer Vergleichsschaltung mit der vorkalkulierten technologischen Rezeptur zu vergleichen, um dann ggf. bei einer festgestellten Abweichung zwischen Istwerten auf der einen Seite und Sollwerten auf der anderen Seite eine Nacheinstellung der Istwerte vornehmen zu können, und zwar während des eigentlichen Wärmebehandlungsverfahrens.

Auf diese Weise ist in vorteilhafter Weise eine ständige, das heißt kontinuierliche Nachanpassung der das Verfahrensergebnis maßgeblich beeinflussenden Verfahrensparameter möglich, sofern sich dies als erforderlich erweisen sollte.

Es liegt im Sinne eines fachmännischen Handelns, wenn zur Bestimmung der Istwerte die Messeinrichtung mit entsprechenden Sensoren, wie beispielsweise Temperatur- und/oder Drucksensoren ausgerüstet wird.

Die Erfindung erlaubt es in ihrer Gesamtheit, die zur Erzielung eines bestimmten Wärmebehandlungsergebnisses notwendigerweise voreinzustellenden Verfahrensparameter in automatischer Weise nach dem Verfahren und Computerprogramm mittels der erfindungsgemäßen Einrichtung auszuführen. Dabei sind die anzugebenden Auswahl- und/oder Vorgabewerte stets solche, die frei von irgendwelchen subjektiven oder bedienerseitigen Erfahrungswerten objektiv erfassbar sind.

Im Ergebnis lässt sich mittels der Erfindung in vorteilhafter Weise das erstellte Rezept zur Wärmebehandlung metallischer Werkstücke programmtechnisch auf- und vorbereiten, so dass im Weiteren eine autonome Abwicklung des Wärmebehandlungsverfahrens möglich ist.

Da die Verfahrensparameter zur Durchführung eines Wärmebehandlungsverfahrens automatisch bestimmbar und festlegbar sind, ergibt sich insgesamt der Vorteil, dass bedienerseitige Fehleingaben hinsichtlich der vorzugebenden Verfahrensparameter dem Grunde nach ausgeschlossen sind. Werkstückfehlbehandtungen können praktisch verhindert werden.

Kurze Beschreibung der Zeichnungen

In den Zeichnungen zeigen
- Fig. 1: eine schematische Darstellung des erfindungsgemäßen Programms und der Einrichtung,
- Fig. 2 a): ein Fließbild der erfindungsgemäßen Struktur der Programmschritte in der Benutzerschnittstelle,

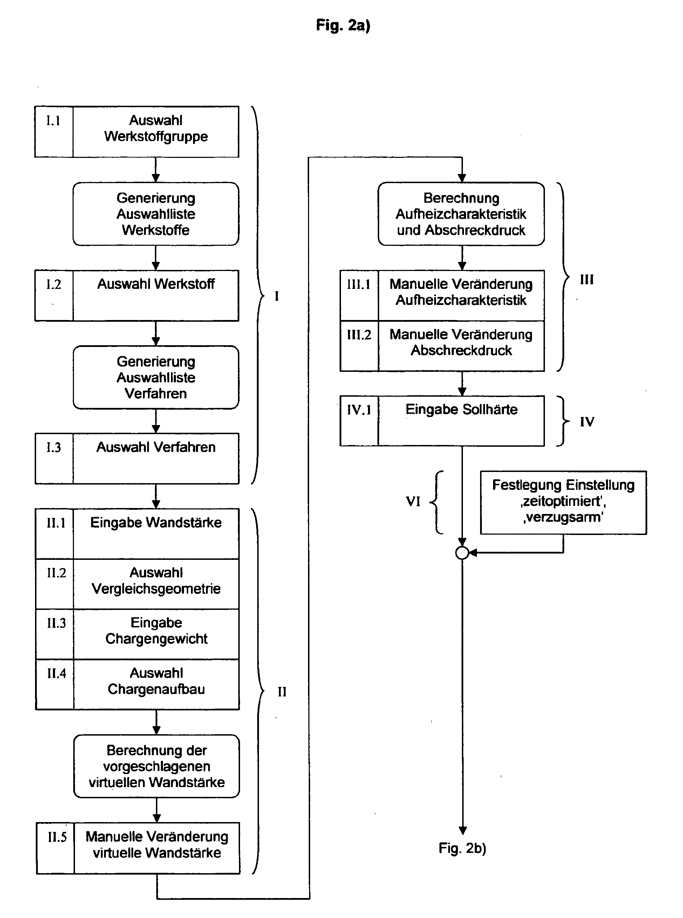

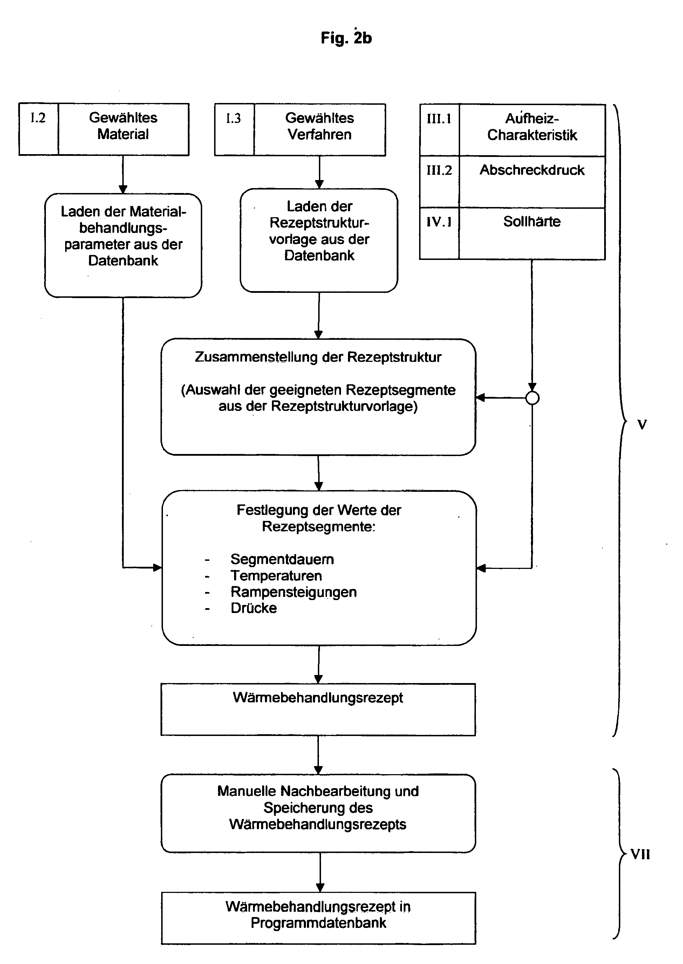

- Fig. 2 b): ein Füeßbild der Elemente der Programmerstellung,

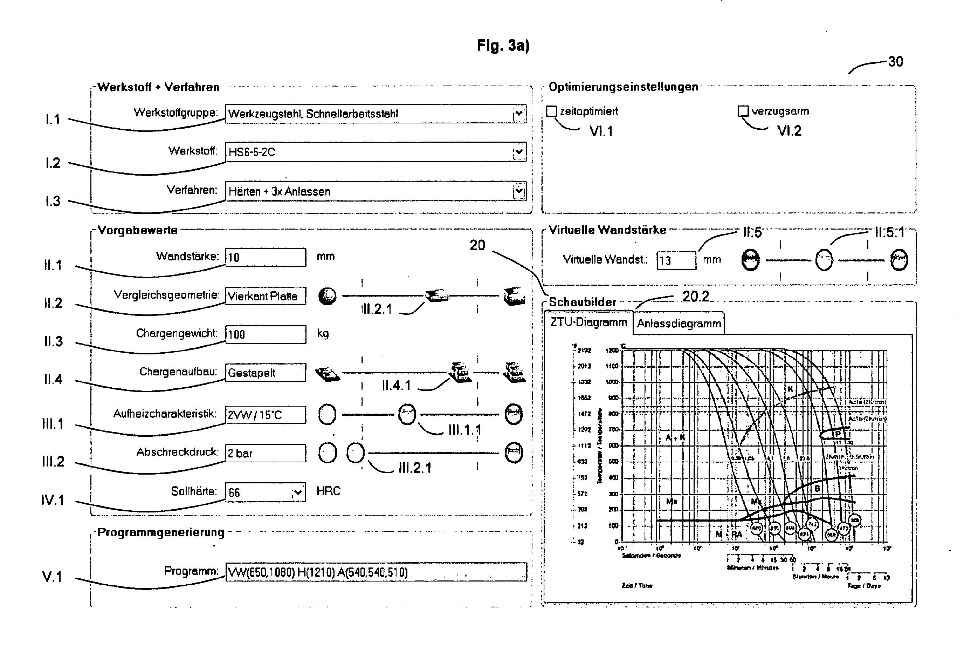

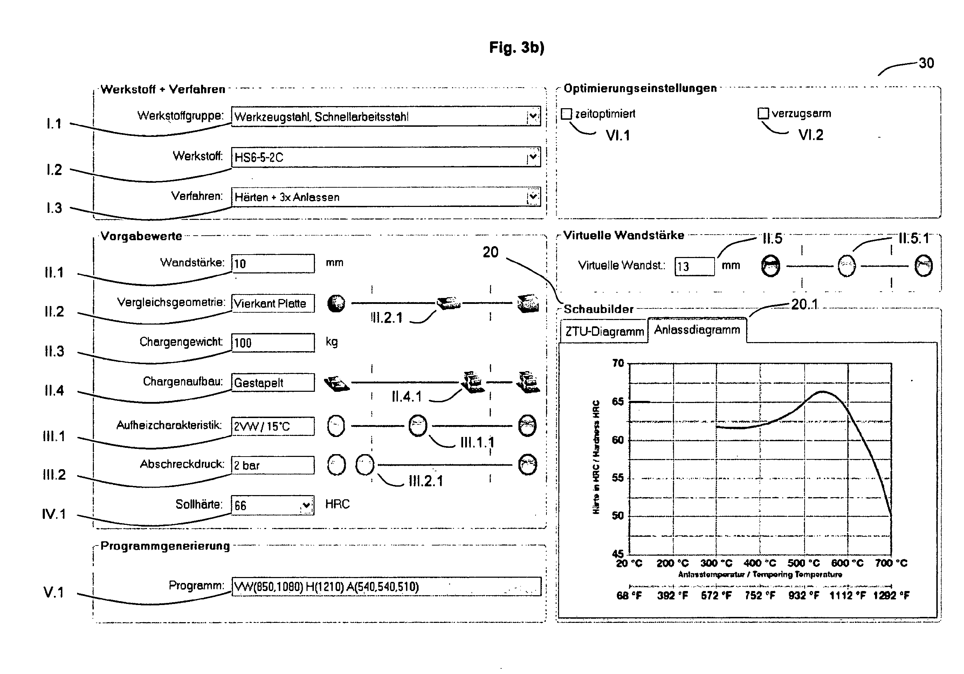

- Fig. 3 a): eine dem Computer zugeordnete Benutzeroberfläche zur Programmbedienung mit dem symbolisch angezeigten Schaubild ZTU-Diagramm (Zeit-Temperatur-Umwandlung) und
- Fig. 3 b): wie Fig. 3 a), jedoch mit dem symbolisch angezeigten Schaubild Anlassdiagramm.

### Bester Weg zur Ausführung der Erfindung

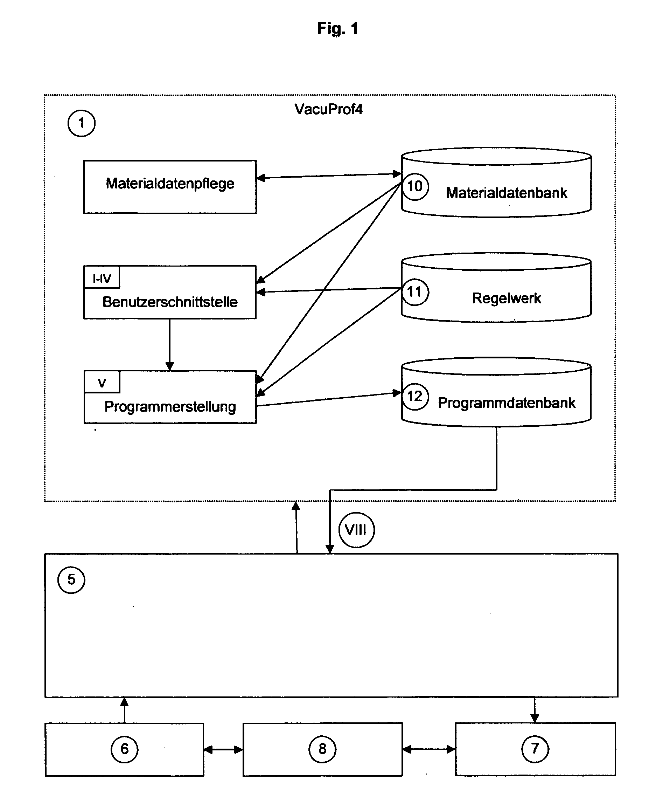

Die Erfindung wird zunächst mit dem Schema gemäß Fig. 1 beschrieben.

In einem Computer 1 ist
- eine Materialdatenbank 10 mit einer ersten Datei für Werkstoffgruppen, zweiten Datei für Werkstoffe, dritten Datei für Verfahren und achten Datei für Arbeitshärten sowie
- ein Regelwerk 11 mit einer vierten Datei für Vergleichsgeometrien, fünften Datei für Chargenaufbauten, sechsten Datei für Aufheizcharakteristiken und siebten Datei für Abschreckcharakteristiken
hinterlegt.

Die Materialdatenbank 10 und das Regelwerk 11 umfassen die für ein Wärmebehandlungsprogramm bestimmbaren und vorkalkulierbaren Parameter. Damit wird eine bedienerfreundliche und objektiv bedingte Auswahl und/oder Anzeige der in Grenzen erfassten Parameter ermöglicht.

Mit den Blöcken "Materialdatenpflege" und "Benutzerschnittstelle I-IV" sind die funktionellen Beziehungen des Programms zu der Materialdatenbank 10 und dem Regelwerk 11 sowie einer Programmdatenbank 12 angedeutet. In der Programmdatenbank 12 wird das erfindungsgemäß erstellte wärmetechnologische Rezept abgespeichert, es ist zur Wärmebehandlung der Werkstücke zu einem Industrieofen 5 übertragbar. Dem Industrieofen 5 sind eine Meßeinheit 7 und eine Regelungseinheit 6 mit zwischengeschalteter Vergleichsschaltung 8 zugeordnet.

Die Fließbilder gemäß Fig. 2 a) und Fig. 2 b) zeigen vereinfacht die erfindungsgemäße Programmfolge, wobei verfahrensgemäß in dem Programm
1. in einem ersten Programmschritt I eine Werkstoffgruppe und der Werkstoff ausgewählt und in Abhängigkeit vom ausgewählten Werkstoff ein Wärmebehandlungsverfahren bestimmt wird,
2. in einem zweiten Programmschritt II Daten des Werkstücks Charge wie
   ■ eine Wandstärke eingegeben,
   ■ eine Vergleichsgeometrie ausgewählt,
   ■ ein Chargengewicht eingegeben und
   ■ ein Chargenaufbau ausgewählt
   werden und daraus automatisch eine virtuelle Wandstärke berechnet wird,
3. in einem dritten Programmschritt III aus der virtuellen Wandstärke zusammen mit den Daten der Charge und den verfügbaren Parametern des Industrieofens 5 eine vom Werkstoff abhängige und ggf. manuell veränderbare Aufheiz- und Abschreckcharakteristik integriert werden und
4. in einem vierten Programmschritt V zuerst
   ■ Daten von dem gewählten Material zu Behandlungsparametern und Daten von dem gewählten Wärmebehandlungsverfahren zu einer Rezeptstrukturvorlage geladen werden und
   ■ aus der Rezeptstrukturvorlage unter Verwendung der Daten aus einer Benutzerschnittstelle, wie
      ∘ Aufheizcharakteristik und
      ∘ Abschreckcharakteristik
         sowie erforderlichenfalls
      ∘ eine Sollhärte
         zu einer Rezeptstruktur zusammengestellt werden, woraus
   ■ Werte von Rezeptursegmenten, wie
      ∘ Segmentdauern,
      ∘ Temperaturen,
      ∘ Rampensteigungen und/oder Temperaturrampen und
      ∘ Drücke
      festgelegt werden und dann im Ergebnis des vierten Programmschritts V ein technologisches Wärmebehandlungsrezept automatisch generiert wird, welches nacharbeitbar, in der Programmdatenbank 12 speicherbar sowie für die Wärmebehandlung von metallischen Werkstücken zum Industrieofen 5 abrufbar ist.

Im fachmännischen Sinne der Erfindung sind aus o.g. Werten von Rezeptursegmenten die u.a. gewählten Begriffe, wie folgt zu definieren:
- "Segmentdauern" als Zeiten für die Wärmebehandlung des Werkstücks in dem jeweiligen Behandlungsabschnitt,
- "Temperaturrampen" als linearer Temperaturverlauf von einem Anfangstemperaturwert zu Beginn eines Segments bis zu einem Zieltemperaturwert am Ende dieses Segments und
- "Rampensteigungen" als Steigung einer Temperaturrampe, wobei die Steigung sowohl positiv als auch negativ sein kann und in der Einheit [Grad Celsius pro Minute] eingegeben wird.

Nach dem dritten Programmschritt III wird gemäß Fig. 2 a) in einem ersten Arbeitsschritt IV die gewünschte Sollhärte als Richtwert einer Arbeitshärte aus einem Wertebereich nach vom Werkstoff abhängigen und erreichbaren Arbeitshärten ausgewählt und eingegeben.

Nach mindestens dem dritten Programmschritt III kann in einem zweiten Arbeitsschritt VI eine zeitoptimierte oder verzugsarme Behandlung des Werkstücks/der Charge festgelegt und vorgenommen werden.

In einem dritten Arbeitsschritt VII kann gemäß Fig. 2 b) eine manuelle Nachbearbeitung und Speicherung des generierten Wärmebehandlungsrezeptes in der Programmdatenbank erfolgen.

In einem fünften Programmschritt VIII (Fig. 1) erfolgt eine Übertragung des Wärmebehandlungsrezeptes an den Industiefen 5, wobei für die darin autonom ablaufende Wärmebehandlung des Werkstücks/der Charge das Wärmebehandlungsprogramm aus der Programmdatenbank 12 abgerufen und zur Wärmebehandlung vermittelt wird.

Im ersten Programmschritt I wird das Behandlungsverfahren aus Daten der Werkstoffgruppe und des Werkstoffs gemäß einer ersten Datei, zweiten Datei und dritten Datei der Materialdatenbank 10 bestimmt.

Im zweiten Programmschritt II wird die virtuelle Wandstärke gemäß einem Algorithmus als Funktion = fᵥ * nach der Beziehung fᵥ = f_{CG} * f_{CA} * f_{G1} generiert.

Das Regelwerk 11 umfasst eine vierte Datei für die Vergleichsgeometrie, eine fünfte Datei für den Chargenaufbau, eine sechste Datei für die Aufheizcharakteristik und eine siebte Datei für die Abschreckcharakteristik.

Die vierte Datei im Regelwerk 11 beinhaltet die Daten für die Angabe von Vergleichsgeometrien, wie Kugel, zylindrische Scheibe, Hohlzylinder Ring, Zylinder Welle, Vierkant Platte, Vierkant Stab, Vierkant Würfel.

Die fünfte Datei im Regelwerk 11 beinhaltet den Chargenaufbau wie einlagig liegend, einlagig stehend, mehrlagig liegend, mehrlagig stehend, gestapelt.

Im dritten Programmschritt III werden die Aufheizcharakteristik gemäß der sechsten Datei im Regelwerk 11 in der Dimension der Anzahl der Vorwärmstufen in Steigungen von °C/min als Gradient und die Abschreckcharakteristik gemäß der siebten Datei 2.9 in bar eingegeben.

Nach dem ersten Programmschritt I werden im Computer 1 (Fig. 1) als Schaubilder 20 ein hinterlegtes ZTU-Schaubild 20.2 (Fig. 3 a)) und ein hinterlegtes Anlass-Schaubild 20.1 (Fig. 3 b)) auf einer Benutzeroberfläche 30 angezeigt.

Die gewünschte Arbeitshärte wird gemäß einer achten Datei aus der Materialdatenbank 10 eingegeben.

Das im Industrieofen 5 ablaufende, aus Parametern einer Wärmebehandlung einer vorgegebenen Technologie generierte und gespeicherte komplexe wärmetechnologische Rezept wird gemäß Fig. 1 mittels der Meßeinheit 7 mit Istwerten gemessen, über die Vergleichsschaltung 8 mit den Parametern der vorgegebenen Technologie verglichen und bei Ungleichheit mittels der Regelungseinheit 6 nachgeregelt.

Für die programmgemäße Erstellung des wärmetechnologischen Rezepts dient die Benutzeroberfläche 30 entsprechend Fig. 3 a) und Fig. 3 b) mit fünf virtuellen Schiebereglern, wie ein erster virtueller Schieberegler II.2.1, ein zweiter virtueller Schieberegler II.4.1, ein dritter virtueller Schieberegler II.5.1, ein vierter virtueller Schieberegler III.1 und ein fünfter virtueller Schieberegler III.2.1. Diese unterstützen eine bedienerfreundliche und objektiv bedingte Auswahl und/oder Anzeige der in Grenzen erfassten Werte der in den entsprechenden Dateien hinterlegten Eingabedaten.

Diese Benutzeroberfläche 30 ist sowohl eine zweckmäßige technische als auch formallogische Hilfe, die den Bediener somit bei einer Programmführung zur Bestimmung der technologischen Rezeptur einer objektiv erforderlichen Wärmebehandlung progressiv führt.

Wie in den Fig. 2 a) und Fig. 2 b) schematisch dargestellt, wird mit der stufenweisen Generierung oder Vorgabe der vorkalkulierbaren Parameter 2 gemäß den folgenden Verfahrensschritten die Wärmebehandlung des Werkstücks festgelegt, wonach der Computer 1 (Fig. 1) das endgültige Wärmebehandlungsprogramm für den Industrieofen 5 (Fig. 1) generiert.

Die Erfindung präzisiert sich in den Programmschritten nach beispielsweise ausgewählten Daten wie folgt:

In dem ersten Programmschritt I wird aus Daten der Werkstoffgruppe wie Schnellarbeitsstahl und dem beispielsweisen Werkstoff wie HS6 5 2C in Abhängigkeit von diesem ausgewählten Werkstoff ein Behandlungsverfahren wie hier Härten + 3x Anlassen bestimmt.

In dem zweiten Programmschritt II mit Daten von Werkstücken einer Charge werden
■ eine Wandstärke von 10 mm,
■ eine Vergleichsgeometrie wie Vierkant Platte mit dem ersten virtuellen Schieberegler II.2.1,
■ ein gesamtes Chargengewicht von 100 kg und
■ ein Chargenaufbau wie Gestapelt mit dem zweiten virtuellen Schieberegler II.4.1
eingegeben und daraus automatisch eine virtuelle Wandstärke von 13 mm generiert, die mit dem dritten virtuellen Schieberegler II.5.1 noch veränderbar und gemäß Fig. 3 a) und Fig. 3 b) in einem Feld II.5 anzeigbar ist.

Diese generierte Wandstärke von 13 mm errechnet sich aus der im Programm erfindungsgemäß hinterlegten Funktion fv = f_{CG} * f_{CA} * f_{G1} mit den Faktoren f_{CG}, f_{CA} und f_{G1} sowie den im Programm integrierten Tabellen, wie

| Geometrie | Geometriefaktor f_{G1} | Geometriesummand f_{G2} |
|---|---|---|
| Kugel | 0.9 | 0.0 |
| Zylinder Scheibe | 1.0 | 0.0 |
| Hohlzylinder Ring | 1.05 | 0.0 |
| Zylinder Welle | 1.0 | 0.0 |
| Hohlzylinder Rohr | 1.1 | 0.1 |
| Vierkant Platte | 1.0 | 0.1 |
| Vierkant Stab | 1.0 | 0.1 |
| Vierkant Wuerfel | 1.0 | 0.0 |

| Chargenaufbau | Chargenaufbaufaktor f_{CA} |
|---|---|
| Einlagig liegend | 1.0 |
| Einlagig stehend | 1.0 + f_{G2} |
| Mehrlagig liegend | 1.2 |
| Mehrlagig stehend | 1.2 + f_{G2} |
| Gestapelt | 1.3 |

| Chargengewicht | Chargengewichtsfaktor f_{CG} |
|---|---|
| Gewicht <= 1/4 * Maximalgewicht | 1.0 |
| 1/4 * Maximalgewicht < Gewicht <= 2/4 * Maximalgewicht | 1.1 |
| 2/4 * Maximalgewicht < Gewicht <= 3/4 * Maximalgewicht | 1.2 |
| 3/4 * Maximalgewicht < Gewicht | 1.3 |

In dem dritten Programmschritt III werden aus der virtuellen Wandstärke zusammen mit den Daten der Charge und den verfügbaren Parametern des Industrieofens 5 eine vom Werkstoff abhängige Aufheizcharakteristik von 2VW/15°C und eine Abschreckcharakteristik von 2 bar integriert, die (wie aus Fig. 3 a) und b) ersichtlich) mittels viertem virtuellen Schieberegler III.1.1 und fünftem virtuellen Schieberegler III.2.1 gewählt werden und veränderbar sind.

Stufen der von der virtuellen Wandstärke, dem Material und dem gewählten Verfahren abhängigen Aufheizcharakteristik (mit der im Regelwerk 11 erfassten sechsten Datei (Fig. 1)) sind:

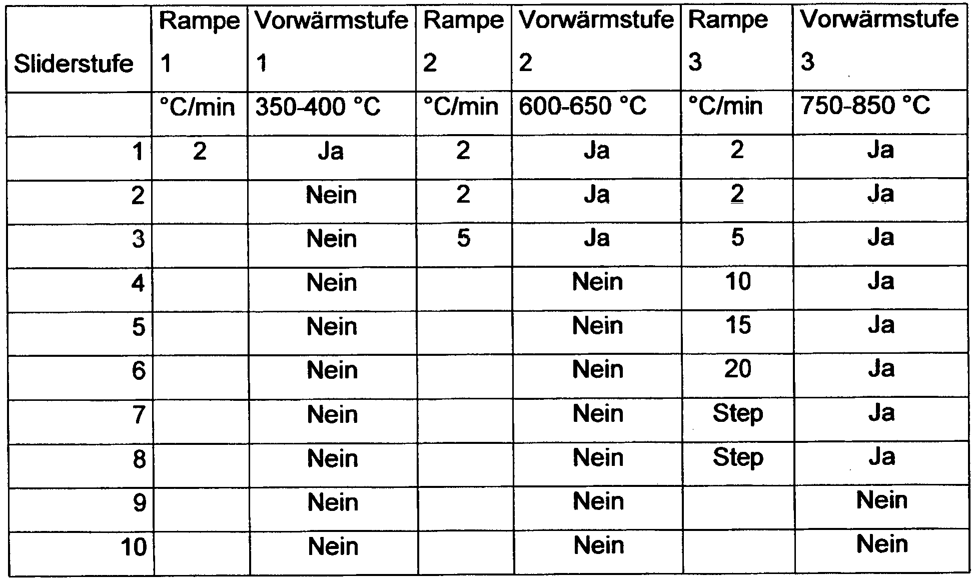

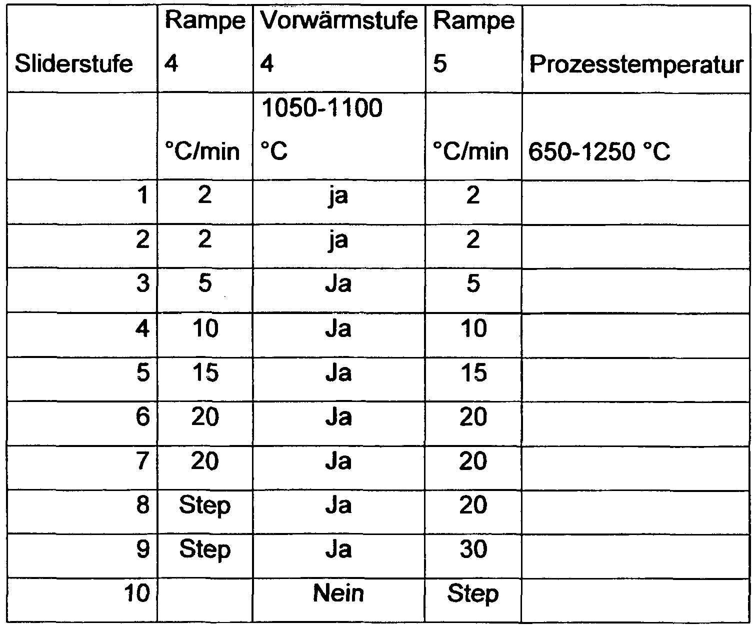

Die vorgeschlagene, von der virtuellen Wandstärke abhängige Stufe der Aufheizcharakteristik wird nach folgender Tabelle ermittelt:

| Wandstärke | Sliderstufe |
|---|---|
| 0-10 mm | 6 |
| 10-50 mm | 5 |
| 50-150 mm | 3 |
| 150-600 mm | 2 |

Die Anzahl der Vorwärmstufen ist sowohl vom gewählten Verfahren als auch vom verwendeten Material abhängig.

Die Daten hierzu sind in der Materialdatenbank 10 und im Regelwerk 11 (Fig. 1) hinterlegt.

Der Bereich der möglichen Sliderstufen für die Aufheizcharakteristik ist gemäß folgender Tabelle von der Anzahl der Vorwärmstufen abhängig.

| Anzahl Vorwärmstufen | Mögliche Sliderstufen |
|---|---|
| 1 | 9-10 |
| 2 | 4-10 |
| 3 | 2-10 |
| 4 | 1-10 |

Die von der virtuellen Wandstärke, dem Material und dem gewählten Verfahren abhängige Abschreckcharakteristik wird wie folgt ermittelt.

Für jedes Material ist in der Material-Behandlungsdatenbank ebenfalls eine Tabelle hinterlegt, die den Abschreckdruck in Abhängigkeit von der virtuellen Wandstärke angibt. Dabei sind die virtuellen Wandstärken in jeweils vier Bereiche gruppiert.

### Beispiel: HS6-5-2C

| Wandstärke | Abschreckdruck in bar |
|---|---|
| 0-10 mm | 2 |
| 10-50 mm | 5 |
| 50-150 mm | 8 |
| 150-600 mm | 12 |

In dem ersten Arbeitsschritt IV wird eine gewünschte Arbeitshärte als Richtwert aus einem Wertebereich nach dem vom Werkstoff abhängigen Anlaßschaubild 20.1 (Fig. 3 b)) mit erreichbaren Sollwert von 66 HRC ausgewählt und eingegeben.

In dem zweiten Arbeitschritt VI kann das generierte Wärmebehandlungsprogramm auf eine zeitoptimierte oder verzugsarme Behandlung des Werkstücks/der Charge eingestellt werden.

In dem vierten Programmschritt V wird nun das komplexe wärmetechnologische Rezept mit dem Programmnamen VW(850,1080)H(1210)A540,540,510) automatisch generiert, welches wiederholbar und in der Programmdatenbank für einen Abruf einer Eingabe zum Industrieofen 5 abspeicherbar und gemäß den Fig. 3 a) und Fig. 3 b) unter dem Bezugszeichen V.1 anzeigbar ist.

In dem dritten Arbeitschritt VII (Fig. 2 b)) ist eine manuelle Nachbearbeitung des wärmetechnologischen Rezepts möglich.

Für die im Industrieofen 5 autonom ablaufende Wärmebehandlung des Werkstücks/der Charge wird das Wärmebehandlungsprogramm aus der Programmdatenbank in dem fünften Programmschritt VIII (Fig. 1) abgerufen und zur Wärmebehandlung im Industrieofen 5 vermittelt.

Mit Bezug auf Fig. 3 a) und Fig. 3 b) umfassen für den Ablauf des Programms
- in der Materialdatenbank 10 (Fig. 1)
   a) die erste Datei die Angaben der Werkstoffgruppen, wie hier der in einem Feld I:1 ausgewählte Schnellarbeitsstahl,
   b) die zweite Datei die Definition der Werkstoffe, wie hier in einem Feld 1.2 ausgewählt HS-6-5C,
   c) die dritte Datei die Behandlungsverfahren, wie hier in einem Feld I.3 mit Härten + 3x Anlassen bestimmt und
   d) die achte Datei mit der in einem Feld IV.1 eingegebenen gewünschten Arbeitshärte von 66 HRC,
      ■ in dem Regelwerk 11 (Fig. 1)
   e) die vierte Datei die Angabe von Vergleichsgeometrien, wie hier in einem Feld II.2 mit Vierkant Platte angegeben,
   f) die fünfte Datei den mittels zweitem virtuellen Schieberegler II.4.1 eingebbaren Chargenaufbau, wie hier in einem Feld II.4 mit gestapelt zutreffend,
   g) die für die Aufheizcharakteristik zuständige sechste Datei, aus der die Dimension mit 2 Vorwärmstufe in der Steigerung von 15°C/min in einem Feld III.1 angegeben ist, und
   h) die für die Abschreckcharakteristik zuständige siebte Datei, aus der in einem Feld III.2 2 bar eingegeben wird.

In einem Feld II.1 werden die Daten für Wandstärke mit 10 mm und in einem Feld 11.3 die Daten für das Chargengewicht mit 100 kg ohne im Computer hinterlegte Dateien eingegeben.

Die Optimierungseinstellungen erfolgen in einem Feld V.1 (Fig. 3 a) und Fig. 3 b)) mit zeitoptimiert oder in einem Feld V.2 mit verzugsarm.

Schließlich erscheint in dem Feld VI.1 (Fig. 3 a) und Fig. 3 b)) der Name des wärmetechnologischen Rezepts wie hier mit "VW(850,1080)H(1210)A540,540,510)" generiert.

Das im Industrieofen 5 ablaufende, aus Parametern der Wärmebehandlung einer vorgegebenen Technologie generierte und gespeicherte komplexe wärmetechnologische Rezept mit dem Programmnamen VW(850,1080)H(1210)A540,540,510) wird gemäß Fig. 1 mittels einer Meßeinheit 7 mit Istwerten gemessen, über eine Vergleichsschaltung 8 mit den Parametern der vorgegebenen Technologie verglichen und bei Ungleichheit mittels einer Regelungseinheit 6 nachgeregelt.

Dazu umfasst entsprechend Fig. 1 die Einrichtung zur Durchführung des Verfahrens den Computer 1 mit der Programmdatenbank 12 für eine programmgemäße Speicherung des benannten generierten Wärmebehandlungsprogramms und dessen Abruf zur Aktivierung der Wärmebehandlung in dem Industrieofen 5, wozu die Meßeinheit 7 für die im Industrieofen 5 gemessenen Istwerte, die Vergleichsschaltung 8 für den Vergleich mit Parametern der vorgegebenen Technologie und die Regelungseinheit 6 für die Nachregelung bei Ungleichheit von Parametern vorgesehen sind.

Die dem Computer 1 gemäß Fig. 3 a) und Fig. 3 b) zugeordnete Benutzeroberfläche 30 bringt also oben bezeichnete Felder wie folgt zur Anzeige:
- Werkstoffgruppe (Feld I.1), Werkstoff (Feld I.2) und Verfahren (Feld 1.3),
- Wandstärke (Feld II.1), Vergleichsgeometrie (Feld II.2), Chargengewicht (Feld II.3), Chargenaufbau (Feld II.4), virtuelle Wandstärke (Feld II.5),
- Aufheizcharakteristik (Feld III.1), Abschreckcharakteristik (Feld III.2),
- Arbeitshärte/Sollhärte (Feld IV.1),
- zeitoptimierte (Feld VI.1) oder verzugsarme (Feld VI.2) Einstellung und
- Programmname (Feld V.1).

Zu einem gewünschten Zeitpunkt der im Industrieofen 5 autonom durchzuführenden Wärmebehandlung der Charge entsprechend dieser komplex generierten Rezeptur kann über einen nicht bezeichneten Button der Benutzeroberfläche 30 aus der Programmdatenbank dieses generierte Programm "VW(850,1080)H(1210)A540,540,510)" gemäß dem achten Programmschritt VIII (Fig. 1) abgerufen und zur Wärmebehandlung im Industrieofen 5 vermittelt werden. Gemäß Fig. 3 a) und Fig. 3 b) ist das schrittweise erarbeitete Wärmebehandlungprogramm in der Benutzeroberfläche 30 insgesamt symbolisch nachvollziehbar und mittels nicht näher bezeichneter z.B. Reiter oder Buttons manuell und fehlerlos bearbeitbar.

Die Fig. 2a) und 2 b) geben als Fließbild einen Überblick der Zusammenhänge des programmgemäßen Ablaufs der Erstellung des wärmetechnologischen Rezeptes gemäß den entsprechenden Werten bis zur programmgemäßen Speicherung des generierten Wärmebehandlungsprogramms und den Abruf zur Aktivierung der Wärmebehandlung im Industrieofen 5 aus der Programmdatenbank 12. Hieraus ist die prinzipielle Programmfolge nach der Erfindung ersichtlich.

Die in den einzelnen Blöcken der Fig. 2a) und Fig. 2 b) dargestellten und erläuterten Zusammenhänge und Beziehungen gehören zum Offenbarungsgehalt der Erfindung und lassen auch erfindungsgemäße Programmführungen zu, die den hier beschriebenen gleichwirkend oder äquivalent sein können. Entscheidend ist dafür, daß das Programm wie hier z.B. "VW(850,1080)H(1210)A540,540,510)" aus den aufgeführten Parametern analog den 2a) und Fig. 2 b) sowie Fig. 3a) und Fig. 3 b) endgültig automatisch generiert wird.

### Gewerbliche Anwendbarkeit

Entsprechend den internen Erprobungen und erzielten Ergebnissen ist gewährleistet, dass die potentiellen Betreiber von Industrieöfen zur Wärmebehandlung von metallischen Werkstücken mit dem erfindungsgemäßen Verfahren und ComputerProgramm zum Erstellen von entsprechenden technologischen Rezepten und mit der Einrichtung ihre Konzepte zu autonomen Betriebsprozessen bei der Wärmebehandlung von Werkstückchargen effizient und weitgehend unabhängig von Spezialkenntnissen des Bedienerpersonals lösen können.

### Bezugszeichenliste

- 1: Computer
- 5: Industrieofen
- 6: Regelungseinheit
- 7: Meßeinheit
- 8: Vergleichsschaltung

- 10: Material-Datenbank mit
erster Datei für Werkstoffgruppe,
zweiter Datei für Werkstoff,
dritter Datei für Verfahren und
achter Datei für Arbeitshärte

- 11: Regelwerk mit
vierter Datei für Vergleichsgeometrie,
fünfter Datei für Chargenaufbau,
sechster Datei für Aufheizcharakteristik,
siebter Datei für Abschreckcharakteristik

- 12: Programm-Datenbank

- 20: Schaubild
- 20.1: Anlaßschaubild (Diagramm)
- 20.2: ZTU-Schaubild (Diagramm)

- 30: Benutzeroberfläche

- I: erster Programmschritt
- I.1: Feld Werkstoffgruppe
- I.2: Feld Werkstoff
- I.3: Feld Verfahren

- II: zweiter Programmschritt
- II.1: Feld Wandstärke
- II1.2: Feld Vergleichsgeometrie
- II.2.1: erster virtueller Schieberegler
- II.3: Feld Chargengewicht
- II.4: Feld Chargenaufbau
- II.4.1: zweiter virtueller Schieberegler
- II.5: Feld virtuelle Wandstärke
- II.5.1: dritter virtueller Schieberegler

- III: dritter Programmschritt
- III,1: Feld Aufheizcharakteristik
- III.1.1: vierter virtueller Schieberegler
- III.2: Feld Abschreckcharakteristik
- III.2.1: fünfter virtueller Schieberegler

- IV: erster Arbeitsschritt
- IV.1: Feld Arbeitshärte (Sollhärte)

- V: vierter Programmschritt
- V.1: Name des generierten wärmetechnologischen Rezepts/Programmname

- VI.: zweiter Arbeitsschritt
- VI.1: Feld zeitoptimiert
- VI.2: Feld verzugsarm

- VII: dritter Arbeitsschritt

- VIII: fünfter Programmschritt

## Patentansprüche

1. Verfahren zum automatischen Erstellen von technologischen Rezepten zur Wärmebehandlung von metallischen Werkstücken in Industrieöfen (5) mittels
- Werte für einen Werkstoff eines jeweiligen Werkstücks, Angaben zu Wärmebehandlungsverfahren und von technischen Angaben des jeweiligen Industrieofens (5),
- einer stufenweisen Vorgabe oder Generierung von vorkalkulierbaren Parametern für die Wärmebehandlung des Werkstücks,
- eines ein Wärmebehandlungsprogramm generierenden Computers (1) mit Datenbanken und einer programmgemäßen Speicherung eines generierten Wärmebehandlungsprogramms sowie dessen Abruf zur Aktivierung der Wärmebehandlung im Industrieofen (5), **dadurch gekennzeichnet, daß**
a) in einem ersten Schritt (I) eine Werkstoffgruppe und der Werkstoff ausgewählt und in Abhängigkeit vom ausgewählten Werkstoff ein Wärmebehandlungsverfahren bestimmt wird,
b) in einem zweiten Schritt (II) Daten des Werkstücks Charge wie eine Wandstärke eingegeben, eine Vergleichsgeometrie ausgewählt, ein Chargengewicht eingegeben und ein Chargenaufbau ausgewählt werden und daraus automatisch eine virtuelle Wandstärke berechnet wird,
c) in einem dritten Schritt (III) aus der virtuellen Wandstärke zusammen mit den Daten der Charge und den verfügbaren Parametern des Industrieofens (5) eine vom Werkstoff abhängige und ggf. manuell veränderbare Aufheiz- und Abschreckcharakteristik integriert werden und
d) in einem vierten Schritt (V) zuerst
■ Daten von dem gewählten Material zu Behandlungsparametern und Daten von dem gewählten Wärmebehandlungsverfahren zu einer Rezeptstrukturvorlage geladen werden und
■ aus der Rezeptstrukturvorlage unter Verwendung der Daten aus einer Benutzerschnittstelle, wie
∘ Aufheizcharakteristik und
∘ Abschreckcharakteristik sowie erforderlichenfalls
∘ eine Sollhärte
zu einer Rezeptstruktur zusammengestellt werden, woraus
■ Werte von Rezeptursegmenten, wie
∘ Segmentdauern,
∘ Temperaturen,
∘ Rampensteigungen und/oder Temperaturrampen und
∘ Drücke
festgelegt werden und dann im Ergebnis des vierten Schritts (V) ein technologisches Wärmebehandlungsrezept automatisch generiert wird, welches nacharbeitbar, in einer Programmdatenbank (12) speicherbar sowie für die Wärmebehandlung von metallischen Werkstücken zum Industrieofen (5) abrufbar ist.

2. Verfahren nach Anspruch 1, **dadurch gekennzeichnet, dass** nach dem dritten Schritt (III) in einem ersten Arbeitsschritt (IV) die gewünschte Sollhärte als Richtwert einer Arbeitshärte aus einem Wertebereich nach vom Werkstoff abhängigen und erreichbaren Arbeitshärten ausgewählt und eingegeben wird.

3. Verfahren nach Anspruch 1 oder 2, **dadurch gekennzeichnet, dass** nach mindestens dem dritten Schritt (III) in einem zweiten Arbeitsschritt (VI) eine Optimierungseinstellung für eine zeitoptimierte oder verzugsarme Behandlung des Werkstücks/der Charge festgelegt und eingestellt wird.

4. Verfahren nach einem der Ansprüche 1 bis 3, **dadurch gekennzeichnet, dass** in einem dritten Arbeitsschritt (VII) eine manuelle Nachbearbeitung und Speicherung des generierten Wärmebehandlungsrezeptes in der Programmdatenbank erfolgt.

5. Verfahren nach nach einem der Ansprüche 1 bis 4, **dadurch gekennzeichnet, dass** in einem fünften Schritt (VIII) eine Übertragung des Wärmebehandlungsrezeptes an den Ofen erfolgt, wobei für die im Industrieofen (5) autonom ablaufende Wärmebehandlung des Werkstücks/der Charge das Wärmebehandlungsprogramm aus der Programmdatenbank (12) abgerufen und zur Wärmebehandlung im Industrieofen (5) vermittelt wird.

6. Verfahren nach einem der Ansprüche 1 bis 5, **dadurch gekennzeichnet, dass** im ersten Schritt (I) das Behandlungsverfahren aus Daten der Werkstoffgruppe und des Werkstoffs gemäß einer ersten Datei, zweiten Datei und dritten Datei einer Materialdatenbank (10) bestimmt wird.

7. Verfahren nach einem der Ansprüche 1 bis 6, **dadurch gekennzeichnet, dass** im zweiten Schritt (II) die virtuelle Wandstärke gemäß einem Algorithmus als Funktion = fᵥ * nach der Beziehung fv = f_{CG} * f_{CA} * f_{G1} generiert wird, wobei mit f_{CG} der Chargengewichtsfaktor, mit f_{CA} der Chargenaufbaufaktor und mit f_{G1} der Geometriefaktor bezeichnet wird.

8. Verfahren nach einem der Ansprüche 1 bis 7, **dadurch gekennzeichnet, dass** ein Regelwerk (11) verwendet wird, welches eine vierte Datei für die Vergleichsgeometrie, eine fünfte Datei für den Chargenaufbau, eine sechste Datei für die Aufheizcharakteristik und eine siebte Datei für die Abschreckcharakteristik umfasst.

9. Verfahren nach einem der Ansprüche 1 bis 8, **dadurch gekennzeichnet, dass** die vierte Datei im Regelwerk (11) die Daten für die Angabe von Vergleichsgeometrien, wie Kugel, zylindrische Scheibe, Hohlzylinder Ring, Zylinder Welle, Vierkant Platte, Vierkant Stab, Vierkant Würfel umfasst.

10. Verfahren nach einem der Ansprüche 1 bis 9, **dadurch gekennzeichnet, dass** die fünfte Datei im Regelwerk (11) den Chargenaufbau wie einlagig liegend, einlagig stehend, mehrlagig liegend, mehrlagig stehend, gestapelt umfasst.

11. Verfahren nach einem der Ansprüche 1 bis 10, **dadurch gekennzeichnet, dass** im dritten Schritt (III) die Aufheizcharakteristik gemäß der sechsten Datei im Regelwerk (11) in der Dimension der Anzahl der Vorwärmstufen in Steigungen von °C/min als Gradient und die Abschreckcharakteristik gemäß der siebten Datei (2.9) in bar eingegeben werden.

12. Verfahren nach einem der Ansprüche 1 bis 11, **dadurch gekennzeichnet, dass** nach dem ersten Schritt (I) ein im Computer (1) hinterlegtes ZTU-Schaubild (20.2) und ein hinterlegtes Anlass-Schaubild (20.1) angezeigt werden.

13. Verfahren nach einem der Ansprüche 1 bis 12, **dadurch gekennzeichnet, dass** die gewünschte Arbeitshärte gemäß einer achten Datei aus der Materialdatenbank (10) eingegeben wird.

14. Verfahren nach einem der Ansprüche 1 bis 13, **dadurch gekennzeichnet, dass** das im Industrieofen (5) ablaufende, aus Parametern einer Wärmebehandlung einer vorgegebenen Technologie generierte und gespeicherte komplexe wärmetechnologische Rezept mittels einer Meßeinheit (7) mit Istwerten gemessen, über eine Vergleichsschaltung (8) mit den Parametern der vorgegebenen Technologie verglichen und bei Ungleichheit mittels einer Regelungseinheit (6) nachgeregelt wird.

15. Einrichtung zur Durchführung des Verfahrens nach einem der Ansprüche 1 bis 14, umfassend einen Computer (1) mit Datenbanken und einer programmgemäßen Speicherung eines generierten Wärmebehandlungsprogramms sowie dessen Abruf zur Aktivierung der Wärmebehandlung in einem Industrieofen (5), **dadurch gekennzeichnet, dass** dem Computer (1) eine Benutzeroberfläche (30) zugeordnet ist, welche Felder zur Anzeige von Werkstoffgruppe (Feld I.1), Werkstoff (Feld I.2) und Verfahren (Feld 1.3), Wandstärke (Feld II.1), Vergleichsgeometrie (Feld II.2), Chargengewicht (Feld II.3), Chargenaufbau (Feld II.4), virtueller Wandstärke (Feld II.5), Aufheizcharakteristik (Feld III.1), Abschreckcharakteristik (Feld III.2), Arbeitshärte/Sollhärte (Feld IV.1), zeitoptimiert (Feld VI.1), verzugsarm (Feld VI.2) und Programmname (Feld V.1) aufweist.

16. Einrichtung nach Anspruch 15, **dadurch gekennzeichnet, dass** die Benutzeroberfläche (30) einen ersten virtuellen Schieberegler (II.2.1) für die vom Bediener auswählbare und veränderbare Vergleichsgeometrie aufweist.

17. Einrichtung nach Anspruch 15 oder 16, **dadurch gekennzeichnet, dass** die Benutzeroberfläche (30) einen zweiten virtuellen Schieberegler (II.4.1) für den vom Bediener auswählbaren und veränderbaren Chargenaufbau aufweist.

18. Einrichtung nach einem der Ansprüche 15 bis 17, **dadurch gekennzeichnet, dass** die Benutzeroberfläche (30) einen dritten virtuellen Schieberegler (II.5.1) für die vom Bediener auswählbare und veränderbare virtuelle Wandstärke aufweist.

19. Einrichtung nach einem der Ansprüche 15 bis 18, **dadurch gekennzeichnet, dass** die Benutzeroberfläche (30) einen vierten virtuellen Schieberegler (III.1.1) für die vom Bediener auswählbare und veränderbare Aufheizcharakteristik aufweist.

20. Einrichtung nach einem der Ansprüche 15 bis 19, **dadurch gekennzeichnet, dass** die Benutzeroberfläche (30) einen fünften virtuellen Schieberegler (III.2.1) für die vom Bediener auswählbare und veränderbare Abschreckcharakteristik aufweist.

21. Einrichtung nach einem der Ansprüche 15 bis 20, **gekennzeichnet durch** eine Meßeinheit (6) für im Industrieofen (5) gemessene Istwerte, eine Vergleichsschaltung (8) für den Vergleich mit Parametern der nach dem generierten Wärmebehandlungsprogramm vorgegebenen Technologie und eine Regelungseinheit (7) für eine Nachregelung bei Ungleichheit von Parametern.

22. Computerprogramm mit Programmcode, um alle Schritte des Verfahrens nach einem der Ansprüche 1 bis 14 durchzuführen.

## Claims

1. A method for the automatic preparation of technological recipes for the heat treatment of metal work pieces in industrial furnaces (5) by means of
- values for a material of a respective work piece, information on the heat treatment method and technical information of the respective industrial furnace (5),
- a stepwise template or generation of pre-calculable parameters for the heat treatment of the work piece,
- a computer (1) generating a heat treatment program with databases and a storage according to the program of a generated heat treatment program as well as its retrieval for activating the heat treatment in the industrial furnace (5), **characterized in that**
a) in a first step (I) a material group and the material are selected and depending on the material selected a heat treatment method is determined,
b) in a second step (II) data of the work piece such as a wall thickness is inputted, a reference geometry is selected, a batch weight is inputted and a batch structure is selected and a virtual wall thickness is calculated automatically therefrom,
c) in a third step (III) from the virtual wall thickness together with the data of the batch and the available parameters of the industrial furnace (5) a heating-up and a chilling characteristic dependent on the material and if necessary manually alterable are integrated and
d) in a fourth step (V) to begin with
■ data from the selected material regarding treatment parameters and data from the selected heat treatment method are loaded to a recipe structure template and
■ from the recipe structure template using the data from a user interface, such as
∘ heating-up characteristic and
∘ chilling characteristic as well as if necessary
∘ a target hardness
are compiled to a recipe structure,
from which
■ values of recipe segments, such as
∘ segment duration,
∘ temperatures,
∘ ramp gradients and/or temperature ramps and
∘ pressures
are set and then as a result of the fourth step (V) a technological heat treatment recipe is automatically generated, which can be reworked, can be stored in a program database (12) and can be retrieved by the industrial furnace (5) for the heat treatment of metallic work pieces.

2. A method according to claim 1, **characterized in that** after the third step (III) in a first work step (IV) the desired target hardness is selected and inputted as a standard value of a work hardness from a value range according to work hardnesses dependent on the material and achievable.

3. A method according to claim 1 or 2, **characterized in that** after at least the third step (III) in a second work step (VI) an optimization setting for a time-optimized or low-distortion treatment of the work piece/batch is set and adjusted.

4. A method according to one of claims 1 to 3, **characterized in that** in a third work step (VII) a manual reworking and storage of the generated heat treatment recipe occurs in the program database.

5. A method according to one of claims 1 to 4, **characterized in that** in a fifth step (VIII) a transfer of the heat treatment recipe to the furnace occurs, wherein for the heat treatment of the work piece/batch running autonomously in the industrial furnace (5) the heat treatment program is retrieved from the program database (12) and is procured for the heat treatment in the industrial furnace (5).

6. A method according to one of claims 1 to 5, **characterized in that** in the first step (I) the heat treatment method is determined from data of the material group and the material according to a first file, second file and third file of a material database (10).

7. A method according to one of claims 1 to 6, **characterized in that** in the second step (II) the virtual wall thickness is generated according to an algorithm as function = f_{V}* according to the relationship f_{V} = f_{CG}* f_{CA}* f_{G1}, wherein with f_{CG} the batch weight factor, with f_{CA} the batch structure factor and with f_{G1} the geometry factor is designated.

8. A method according to one of claims 1 to 7, **characterized in that** a set of regulations (11) is used, which comprises a fourth file for the reference geometry, a fifth file for the batch structure, a sixth file for the heating-up characteristic and a seventh file for the chilling characteristic.

9. A method according to one of claims 1 to 8, **characterized in that** the fourth file in the set of regulations (11) comprises the data for the information of reference geometries, such as a ball, cylindrical disk, hollow cylinder ring, cylinder shaft, square plate, square bar, square cubes.

10. A method according to one of claims 1 to 9, **characterized in that** the fifth file in the set of regulations (11) comprises the batch structure such as single-layer lying, single-layer standing, multilayer lying, multilayer standing, stacked.

11. A method according to one of claims 1 to 10 **characterized in that** in the third step (III) the heating-up characteristic is inputted according to the sixth file in the set of regulations (11) in the dimension of the number of pre-heating steps in increases of °C/min as the gradient and the chilling characteristic is inputted according to the seventh file (2.9) in bar.

12. A method according to one of claims 1 to 11, **characterized in that** after the first step (I) a TTT graph (20.2) on file in the computer (1) and a tempering graph (20.1) on file are displayed.

13. A method according to one of claims 1 to 12, **characterized in that** the desired work hardness is inputted according to an eighth file from the material database (10).

14. A method according to one of claims 1 to 13, **characterized in that** the complex and heat-technology recipe running in the industrial furnace (5), which is generated from parameters of a heat treatment of a given technology and is stored, is measured by means of a measuring unit (7) with actual values, compared via a comparator circuit (8) with the parameters of the given technology and is readjusted in the case of inequality by means of a control unit (6).

15. A device for implementing a method according to one of claims 1 to 14, comprising a computer (1) having databases and a storage according to the program of a generated heat treatment program as well as its retrieval for activating the heat treatment in an industrial furnace (5), **characterized in that** a user interface (30) is assigned to the computer (1), which has fields for the display of material group (field I.1), material (field I.2) and method (field I.3), wall thickness (field II.1), reference geometry (field II.2), batch weight (field II.3), batch structure (field (II.4), virtual wall thickness (field II.5), heating-up characteristic (field III.1), chilling characteristic (field III.2), work hardness/target hardness (field IV.1), time optimized (field VI.1), low-distortion (field VI.2) and program name (field V.1).

16. A device according to claim 15, **characterized in that** the user interface (30) has a first virtual slide control (II.2.1) for the reference geometry which is selectable and alterable by the user.

17. A device according to claim 15 or 16, **characterized in that** the user interface (30) has a second virtual slide control (II.4.1) for the batch structure which is selectable and alterable by the user.

18. A device according to one of claims 15 to 17, **characterized in that** the user interface (30) has a third virtual slide control (II.5.1) for the virtual wall thickness which is selectable and alterable by the user.

19. A device according to one of claims 15 to 18, **characterized in that** the user interface (30) has a fourth virtual slide control (III.1.1) for the heating-up characteristic which is selectable and alterable by the user.

20. A device according to one of claims 15 to 19, **characterized in that** the user interface (30) has a fifth virtual slide control (III.2.1) for the chilling characteristic which is selectable and alterable by the user.

21. A device according to one of claims 15 to 20, **characterized by** a measuring unit (6) for the actual values measured in the industrial furnace (5), a comparator circuit (8) for the comparison with parameters of technology given according to the generated heat treatment program and a control unit (7) for a readjustment in the case of inequality of parameters.

22. A computer program with program codes, in order to implement all of the steps of the method according to one of claims 1 to 14.

## Revendications

1. Procédé permettant l'élaboration automatique de formules technologiques pour le traitement thermique de pièces métalliques dans des fours industriels (5), au moyen
- de valeurs pour un matériau d'une pièce respective, d'informations sur le procédé de traitement thermique et d'informations techniques sur le four industriel (5) respectif,
- d'une définition ou génération progressive de paramètres précalculables pour le traitement thermique de la pièce,
- d'un ordinateur (1) générant un programme de traitement thermique et comportant des bases de données et un stockage selon le programme d'un programme de traitement thermique généré, ainsi que le lancement de ce programme pour activer le traitement thermique dans le four industriel (5),
**caractérisé en ce que**
a) au cours d'une première étape (I), un groupe de matériaux et le matériau sont sélectionnés et un procédé de traitement thermique est déterminé en fonction du matériau sélectionné,
b) au cours d'une deuxième étape (II), des données de la pièce, de la charge, ainsi qu'une épaisseur de paroi sont introduites, une géométrie de référence est sélectionnée, un poids de la charge est introduit et une structure de la charge est sélectionnée et une épaisseur de paroi virtuelle est calculée automatiquement à partir de celle-ci,
c) au cours d'une troisième étape (III), une caractéristique de chauffage et une caractéristique de trempe, fonctions du matériau et, le cas échéant, modifiables manuellement, sont intégrées à partir de l'épaisseur de paroi virtuelle conjointement avec les données de la charge et les paramètres disponibles du four industriel (5), et
d) au cours d'une quatrième étape (V), tout d'abord
- des données du matériau sélectionné sont chargées pour les paramètres de traitement, et des données du procédé de traitement thermique sélectionné sont chargées pour un modèle de structure d'une formule, et
- à partir du modèle de structure d'une formule, sont regroupées pour former une structure d'une formule, moyennant l'utilisation des données issues d'une interface utilisateur, telles que
-- caractéristique de chauffage, et
-- caractéristique de trempe,
ainsi que, le cas échéant,
-- une dureté théorique,
à partir de là, sont définies
- des valeurs de segments d'une formule, telles que
-- durées des segments,
-- températures
-- accroissements des rampes et/ou rampes de température,
et
-- pressions
et ensuite, à la fin de la quatrième étape (V), est générée automatiquement une formule technologique de traitement thermique, qui peut être retravaillée, être stockée dans une base de données du programme (12), et peut être chargée pour le traitement thermique de pièces métalliques dans le four industriel (5).

2. Procédé selon la revendication 1, **caractérisé en ce qu'**après la troisième étape (III), au cours d'une première étape de travail (IV), la dureté théorique souhaitée est choisie et est introduite en tant que valeur de référence d'une dureté de travail dans une plage de valeurs de duretés de travail, qui dépendent du matériau et sont atteignables.

3. Procédé selon la revendication 1 ou 2, **caractérisé en ce qu'**après au moins la troisième étape (III), au cours d'une deuxième étape de travail (VI), un réglage d'optimisation pour un traitement, optimisé en temps ou sans déformation, de la pièce ou de la charge est défini et réglé.

4. Procédé selon l'une quelconque des revendications 1 à 3, **caractérisé en ce que**, au cours d'une troisième étape de travail (VII), il est effectué un traitement ultérieur manuel et une mémorisation de la formule de traitement thermique générée dans la base de données du programme.

5. Procédé selon l'une quelconque des revendications 1 à 4, **caractérisé en ce que**, au cours d'une cinquième étape (VIII), la formule de traitement thermique est transmise au four, et pour le traitement thermique de la pièce ou de la charge, lequel se déroule de manière autonome dans le four industriel (5), le programme de traitement thermique est chargé à partir de la base de données du programme (12) et est transmis pour le traitement thermique dans le four industriel (5).

6. Procédé selon l'une quelconque des revendications 1 à 5, **caractérisé en ce que**, au cours de la première étape (I), le procédé de traitement est déterminé à partir des données du groupe de matériaux ou du matériau selon un premier fichier, un deuxième fichier et un troisième fichier d'une base de données des matériaux (10).

7. Procédé selon l'une quelconque des revendications 1 à 6, **caractérisé en ce que**, au cours de la deuxième étape (II), l'épaisseur de paroi virtuelle est générée selon un algorithme en tant que fonction = fᵥ* d' après la relation fᵥ = f_{CG} * f_{CA} * f_{G1}, dans laquelle f_{CG} désigne le facteur du poids de la charge, f_{CA} désigne le facteur de la structure de la charge et f_{G1} désigne le facteur géométrique.

8. Procédé selon l'une quelconque des revendications 1 à 7, **caractérisé en ce qu'**un recueil de règles (11) est utilisé, lequel comprend un quatrième fichier pour la géométrie de référence, un cinquième fichier pour la structure de la charge, un sixième fichier pour la caractéristique de chauffage et un septième fichier pour la caractéristique de trempe.

9. Procédé selon l'une quelconque des revendications 1 à 8, **caractérisé en ce que** le quatrième fichier dans le recueil de règles (11) comporte les données pour l'indication des géométries de référence, telles qu'une bille, un disque cylindrique, un anneau cylindrique creux, un arbre cylindrique, une plaque rectangulaire, une tige rectangulaire, un cube rectangulaire.

10. Procédé selon l'une quelconque des revendications 1 à 9, **caractérisé en ce que** le cinquième fichier dans le recueil de règles (11) comporte la structure de la charge, telle que monocouche horizontale, monocouche verticale, multicouche horizontale, multicouche verticale, empilée.

11. Procédé selon l'une quelconque des revendications 1 à 10, **caractérisé en ce qu'**au cours de la troisième étape (III), la caractéristique de chauffage selon le sixième fichier dans le recueil de règles (11) est entrée avec la dimension du nombre d'étapes de préchauffage, avec des accroissements de °C/min en tant que gradient, et la caractéristique de trempe selon le septième fichier (2.9) est entrée en bars.

12. Procédé selon l'une quelconque des revendications 1 à 11, **caractérisé en ce qu'**après la première étape (I), une courbe TTT (20.2), stockée dans l'ordinateur (1), et une courbe de revenu (20.1) stockée sont affichées.

13. Procédé selon l'une quelconque des revendications 1 à 12, **caractérisé en ce que** la dureté de travail souhaitée est introduite selon un huitième fichier issu de la base de données des matériaux (10).

14. Procédé selon l'une quelconque des revendications 1 à 13, **caractérisé en ce que** la formule technologique de chaleur complexe, se déroulant dans le four industriel (5), générée à partir de paramètres d'un traitement thermique d'une technologie prédéfinie et mémorisée, est mesurée avec des valeurs réelles au moyen d'une unité de mesure (7), est comparée via un circuit de référence (8) aux paramètres de la technologie prédéfinie et, en cas de non concordance, est nouvellement réglée au moyen d'une unité de réglage (6).

15. Dispositif permettant la mise en oeuvre du procédé selon l'une quelconque des revendications 1 à 14, comportant un ordinateur (1) avec des bases de données et une mémorisation selon le programme d'un programme de traitement thermique généré, ainsi que le lancement de celui-ci pour activer le traitement thermique dans un four industriel (5), **caractérisé en ce qu'**à l'ordinateur (1) est associée une surface utilisateur (30) qui comporte des zones pour afficher les groupes de matériaux (zone I.1), le matériau (zone 1.2) et le procédé (zone 1.3), l'épaisseur de paroi (zone II.1), la géométrie de référence (zone II.2), le poids de la charge (zone II.3), la structure de la charge (zone II.4), l'épaisseur de paroi virtuelle (zone II.5), la caractéristique de chauffage (zone III.1), la caractéristique de trempe (zone III.2), la dureté de travail/dureté théorique (zone IV.1), optimisé en temps (zone VI.1), sans déformation (zone VI.2) et le nom du programme (zone V.1).

16. Dispositif selon la revendication 15, **caractérisé en ce que** la surface utilisateur (30) comporte un premier curseur virtuel (II.2.1) pour la géométrie de référence qui peut être sélectionnée et modifiée par l'utilisateur.

17. Dispositif selon la revendication 15 ou 16, **caractérisé en ce que** la surface utilisateur (30) comporte un deuxième curseur virtuel (II.4.1) pour la structure de la charge qui peut être sélectionnée et modifiée par l'utilisateur.

18. Dispositif selon l'une quelconque des revendications 15 à 17, **caractérisé en ce que** la surface utilisateur (30) comporte un troisième curseur virtuel (II.5.1) pour l'épaisseur de paroi virtuelle qui peut être sélectionnée et modifiée par l'utilisateur.

19. Dispositif selon l'une quelconque des revendications 15 à 18, **caractérisé en ce que** la surface utilisateur (30) comporte un quatrième curseur virtuel (III.1.1) pour la caractéristique de chauffage qui peut être sélectionnée et modifiée par l'utilisateur.

20. Dispositif selon l'une quelconque des revendications 15 à 19, **caractérisé en ce que** la surface utilisateur (30) comporte un cinquième curseur virtuel (III.2.1) pour la caractéristique de trempe qui peut être sélectionnée et modifiée par l'utilisateur.

21. Dispositif selon l'une quelconque des revendications 15 à 20, **caractérisé par** une unité de mesure (6) pour des valeurs réelles mesurées dans le four industriel (5), un circuit de référence (8) pour la comparaison avec des paramètres de la technologie prédéfinie selon le programme de traitement thermique généré, et une unité de réglage (7) pour un nouveau réglage en cas de non concordance des paramètres.

22. Programme informatique comportant un code de programme pour mettre en oeuvre toutes les étapes du procédé selon l'une quelconque des revendications 1 à 14.
